# EUROPEAN PATENT APPLICATION

(11) **EP 4 776 633 A1**
(43) Date of publication of application: **15.07.2026**
(21) Application number: 24861942.1
(22) Date of filing: 02.09.2024
(51) Int. Cl.: H04N 21/439

(54) **AUDIO-BASED TEXT PROCESSING METHOD AND APPARATUS, AND DEVICE AND STORAGE MEDIUM**

(30) Priority: 04.09.2023 CN 202311134444
(71) Applicant: Beijing Zitiao Network Technology Co., Ltd., Beijing 100190 (CN)
(72) Inventor: CAO, Kun, Beijing 100028 (CN)
(74) Representative: Grünecker Patent- und Rechtsanwälte PartG mbB
(86) International application number: PCT/CN2024/116421
(87) International publication number: WO 2025/051099

(57) **Abstract**

Embodiments of the disclosure provide a method, an apparatus, a device, and a storage medium for audio-based text processing. The method includes: obtaining a latest reference audio progress and an audio stream corresponding to a co-streaming end, wherein the co-streaming end comprises a guest end and/or a streamer end; determining a current audio progress of the audio stream based on a local system time and the latest reference audio progress; and playing the audio stream, and rendering target text content corresponding to the audio stream according to the current audio progress. According to the method for audio-based text processing provided by the embodiment of the disclosure, the current audio progress of the audio stream is determined based on the local system time and the latest reference audio progress , so as to render target text content corresponding to the audio stream according to the current audio progress, thereby improving an alignment effect between a display progress of the text and a playing progress of the audio.

## Description

The present application claims priority to Chinese Patent Application No. 202311134444. X, filed on September 4, 2023, and entitled "METHOD, APPARATUS, DEVICE, AND STORAGE MEDIUM FOR AUDIO-BASED TEXT PROCESSING", the entire content of which is incorporated herein by reference.

### FIELD

Embodiments of the present disclosure relate to the field of live streaming technical, in particular to a method, an apparatus, a device and a storage medium for audio-based text processing.

### BACKGROUND

In the singing live streaming scenario, the client where a performer is located sends lyrics or audio progress to a streamer end, and the streamer end forwards the lyrics or audio progress to a viewer end. Because the lyrics are limited to the network or the streaming system during the sending process, the lyrics and the audio cannot be synchronized, such that a viewer perceives that the lyrics are not aligned with the audio, thereby affecting an audio-visual experience. In the related technology, a timer is set at the viewer end to accumulate the audio progress, but the lyrics and the audio are still not synchronized, and the deviation between the lyrics and the audio becomes larger and larger as time passes.

### SUMMARY

Embodiments of the present disclosure provide a method, an apparatus, a device and a storage medium for audio-based text processing, which improve an alignment effect between a display progress of text and a playing progress of audio.

According to a first aspect, an embodiment of the present disclosure provides a method for audio-based text processing, implemented at a viewer end and including: obtaining a latest reference audio progress and an audio stream corresponding to a co-streaming end, where the co-streaming end includes a guest end and/or a streamer end; determining a current audio progress of the audio stream based on a local system time and the latest reference audio progress; and playing the audio stream, and rendering target text content corresponding to the audio stream according to the current audio progress.

According to a second aspect, an embodiment of the present disclosure further provides 9. An apparatus for audio-based text processing, provided in a viewer end and including: a latest reference audio progress obtaining module configured to obtain a latest reference audio progress and an audio stream corresponding to a co-streaming end, where the co-streaming end includes a guest end and/or a streamer end; a current audio progress determining module configured to determine a current audio progress of the audio stream based on a local system time and the latest reference audio progress; and a target text content rendering module configured to play the audio stream, and render target text content corresponding to the audio stream according to the current audio progress.

In a third aspect, an embodiment of the present disclosure further provides an electronic device, including: one or more processors; and a storage device configured to store one or more programs, the one or more programs, when executed by the one or more processors, causing the one or more processors to perform the method for audio-based text processing according to the embodiments of the present disclosure.

According to a fourth aspect, an embodiment of the present disclosure further provides a storage medium including computer executable instructions, the computer executable instructions, when executed by a computer processor, implementing the method for audio-based text processing according to the embodiments of the present disclosure.

According to a fifth aspect, an embodiment of the present disclosure further provides computer program product tangibly stored in a computer storage medium and including computer-executable instructions that, when executed by a device, cause the device to perform the method for audio-based text processing according to the embodiments of the present disclosure.

The embodiments of the present disclosure provide a method, an apparatus, a device and a storage medium for audio-based text processing, the method including: obtaining a latest reference audio progress and an audio stream corresponding to a co-streaming end, where the co-streaming end includes a guest end and/or a streamer end; determining a current audio progress of the audio stream based on a local system time and the latest reference audio progress; and playing the audio stream, and rendering target text content corresponding to the audio stream according to the current audio progress.

### BRIEF DESCRIPTION OF DRAWINGS

The above and other features, advantages, and aspects of the various embodiments in the present disclosure will become more apparent from the following detailed description taken in combination with the accompanying drawings. Throughout the drawings, the same or similar reference numbers refer to the same or similar elements. It should be understood that the drawings are schematic and that the components and elements are not necessarily drawn to scale.
FIG. 1 is a schematic flowchart of a method for audio-based text processing according to an embodiment of the present disclosure;
FIG. 2 is an example diagram of a live streaming scenario according to an embodiment of the present disclosure;
FIG. 3 is an example diagram of determining a current audio progress according to an embodiment of the present disclosure;
FIG. 4 is a schematic structural diagram of an apparatus for audio-based text processing according to an embodiment of the present disclosure;
FIG. 5 is a schematic structural diagram of an electronic device according to an embodiment of the present disclosure.

### DETAILED DESCRIPTION

The embodiments in the present disclosure will be described in more detail below with reference to the accompanying drawings. Although certain embodiments in the present disclosure are shown in the drawings, it would be appreciated that the present disclosure can be implemented in various forms and should not be interpreted as limited to the embodiments described in this specification. On the contrary, these embodiments are provided for a more thorough and complete understanding in the present disclosure. It would be appreciated that the accompanying drawings and embodiments in the present disclosure are only for the purpose of illustration and are not intended to limit the scope of protection in the present disclosure.

**It** should be understood that steps described in method implementations of the present disclosure may be performed in different orders and/or in parallel. Furthermore, the method implementations may include additional steps and/or omit performing the illustrated steps. The scope of the present disclosure is not limited in this regard.

As used herein, the term "include" and its variations would be appreciated as open-ended inclusions, that is, "include but not limited to". The term "based on" would be appreciated as "at least partially based on". The term "an embodiment" would be appreciated as "at least one embodiment". The term "another embodiment" would be appreciated as "at least one other embodiment". The term "some embodiments" would be appreciated as "at least some embodiments". Relevant definitions of other terms may be described in the following description.

It should be noted that concepts such as "first" and "second" mentioned in the present disclosure are only used to distinguish different apparatuses, modules, or units, and are not used to limit the order or interdependence of functions performed by these apparatuses, modules, or units.

It should be noted that modifications of "a" and "a plurality of" mentioned in the present disclosure are illustrative rather than restrictive, and those skilled in the art should understand that the modifications should be understood as "one or more" unless otherwise clearly indicated in the context.

The names of messages or information exchanged between multiple apparatuses in the implementations of the present disclosure are merely used for illustrative purposes, and are not used to limit the scope of these messages or information.

It would be appreciated that before the technical solution disclosed in the embodiments in the present disclosure is used, users should be informed of the type, the scope of use, the use scenario, etc. of the personal information involved in the present disclosure in an appropriate manner and in accordance with relevant laws and regulations, and the authorization of the users may be obtained.

For example, in response to an active request being received from a user, a prompt message is sent to the user to explicitly prompt the user that the operation requested by the user would need acquisition and use of personal information of the user. As such, according to prompt information, users may choose whether to provide personal information to the software or hardware, such as an electronic device, application, server or storage medium, that performs the operations of the technical solution in the present disclosure.

As an optional but non-limiting implementation, in response to the active request being received from the user, the prompt information may be sent to the user via, for example, a pop-up window in which the prompt information may be presented in text. In addition, the pop-up window may also contain selection controls configured for the user to choose "agree" or "disagree" to provide the personal information to the electronic device.

It would be appreciated that the above process of notification and acquisition of user authorization is only exemplary and does not limit the implementations in the present disclosure. Other methods that meet relevant laws and regulations may also be applied to the implementations in the present disclosure.

It may be understood that data involved in the technical solution (including but not limited to the data itself, acquisition or use of the data) should comply with requirements of corresponding laws, regulations, and related provisions.

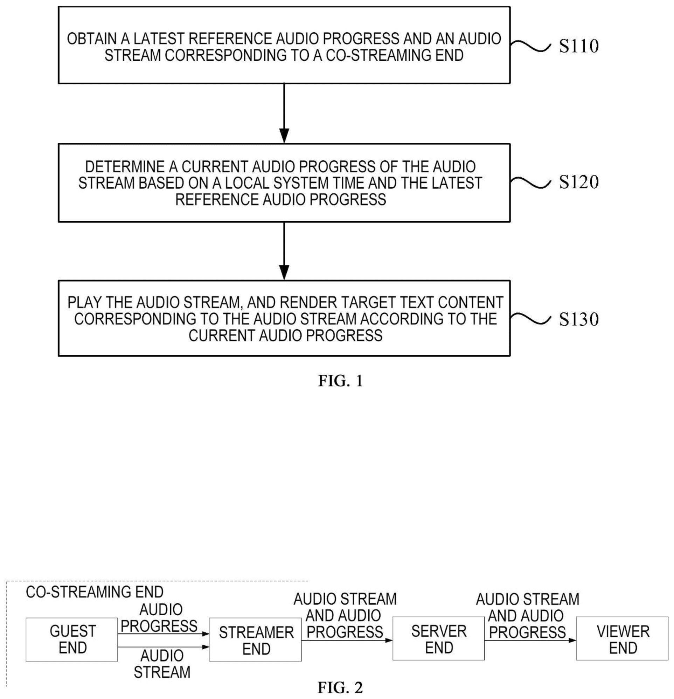

FIG. 1 is a schematic flowchart of a method for audio-based text processing according to an embodiment of the present disclosure.

As shown in FIG. 1, the method includes:
S110: obtain a latest reference audio progress and an audio stream corresponding to a co-streaming end.

In some embodiments, the co-streaming end includes a guest end and/or a streamer end. The audio stream may be obtained by acquiring, at a client at which a performer (a streamer and/or a guest) is located, voice of the performer and merging the voice with background music. For example, FIG. 2 is an example diagram of a live streaming scenario according to an embodiment of the present disclosure. As shown in FIG. 2, the guest end acquires audio of the guest singing, and sends the acquired audio stream to the streamer end, and the streamer end sends the audio stream to the server end, and then the server end forwards the audio stream to the viewer end. If the performer is a streamer, the streamer end directly sends the audio stream to the server end, and then the server end forwards the audio stream to the viewer end. While the client where the performer is located sends the audio stream, the client sends the audio progress at intervals of a set duration, and the streamer end sends the audio progress to the viewer end through the server end. Each time the viewer end receives the audio progress, the latest received audio progress is used as a reference audio progress, so as to determine audio progress at each moment of the viewer end according to the latest reference audio progress.

The audio progress may be understood as a progress of audio playback, and may be represented by a timestamp or a percentage. For example, assuming that the total duration of the audio is 2 minutes, if the current playback reaches 1 minute and 20 seconds, the audio progress is 1 minute and 20 seconds. The latest reference audio progress may be the audio progress most recently received at the viewer end, and the audio progress at each moment of the viewer end is determined based on the most recently received audio progress, that is, the most recently received audio progress is taken as the latest reference audio progress.

Alternatively, the manner of obtaining the latest reference audio progress and an audio stream corresponding to the co-streaming end may include: obtaining latest media supplementary information and the audio stream corresponding to the co-streaming end; and extracting the latest reference audio progress from the latest media supplementary information, and recording a local system time corresponding to a time when the latest media supplementary information is received.

In some embodiments, the latest media supplementary information may be understood as Supplemental Enhancement Information (SEI) most recently received at the viewer end. The local system time may be measured by a local clock of the viewer end. In the present embodiment, the audio progress is sent to the viewer end in form of SEI information, and the viewer end extracts the audio progress from the SEI information as the latest reference audio progress. When the viewer end receives the latest media supplementary information, the local system time at that moment is obtained and recorded.

S 120: determine a current audio progress of the audio stream based on a local system time and the latest reference audio progress.

In some embodiments, the local system time may be obtained by local clock measurements at the viewer end.

Alternatively, the manner of determining the current audio progress of the audio stream based on the local system time and the latest reference audio progress may be: determining, based on the local system time, a time gap between a current moment and a moment when the latest reference audio progress is received; and determining the current audio progress of the audio stream according to the time gap and the latest reference audio progress.

In some embodiments, the time gap between a current moment and a moment when the latest reference audio progress is received may be understood as a time gap between the local system time corresponding to the current moment and the local system time corresponding to the moment when the latest reference audio progress is received.

Specifically, the manner of determining, based on the local system time, a time gap between a current moment and a moment when the latest reference audio progress is received may be: obtaining a first local system time corresponding to the current moment and a second local system time corresponding to the moment when the latest reference audio progress is received; and determining the time gap on the first local system time and the second local system time.

In some embodiments, the manner of determining the time gap based on the first local system time and the second local system time may be: subtracting the second local system time from the first local system time to obtain a time gap between the current moment and the moment when the latest reference audio progress is received. For example, assuming that the first local system time is T1 and the second local system time is T2, the time gap between the current moment and the moment when the latest reference audio progress is received is ΔT = T1 - T2.

Specifically, determining the current audio progress of the audio stream based on the time gap and the latest reference audio progress may include: determining the current audio progress of the audio stream based on the time gap and the latest reference audio progress.

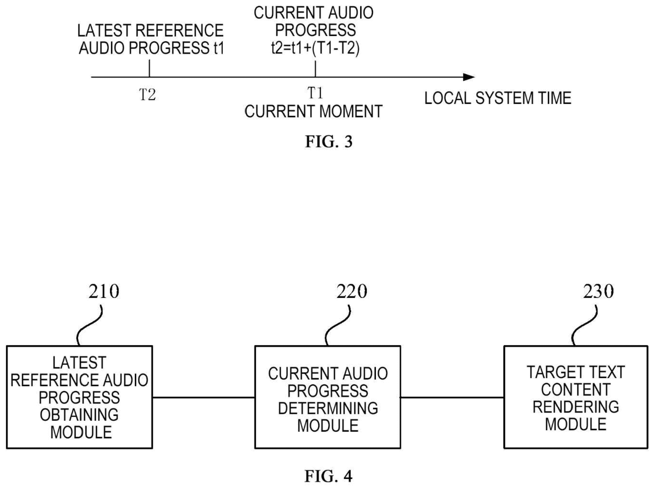

Specifically, the time gap and the latest reference audio progress are accumulated to obtain the current audio progress of the audio stream. In this embodiment, assuming that the current audio progress is represented as t2, the latest reference audio progress is represented as t1, and the time gap is ΔT, the calculation formula for the current audio progress of the audio stream is: t2 = t1 + ΔT. For example, FIG. 3 is an example diagram for determining the current audio progress. As shown in FIG. 2, T2 is a local system time corresponding to a moment when the latest reference audio progress is received, T1 is a local system time corresponding to the current moment, and t1 is the latest reference audio progress. Then, the audio progress corresponding to the current moment is t2 = t1 + (T1 - T2).

S130: play the audio stream, and render target text content corresponding to the audio stream according to the current audio progress.

In this embodiment, the viewer end receives the audio stream sent by the streamer end in real time, and decodes and plays the received audio stream. In order to ensure that the displayed text content is aligned with the played audio, the corresponding target text content needs to be displayed according to the audio progress.

Specifically, the manner of rendering the text content corresponding to the audio stream according to the current audio progress may include: obtaining a text file corresponding to the audio stream; extracting the target text content from the text file based on the current audio progress; and rendering the target text content.

In some embodiments, text content in the text file carries audio timestamps. The text content is composed of multiple characters, and each character carries an audio timestamp, which may be represented in a form of "character: start timestamp, duration". If the audio stream is audio corresponding to a song, the text file is a lyric text file corresponding to the song. The text file corresponding to the audio stream may be sent in advance by the streamer end to the viewer end, or may be obtained by the viewer end from a preset data source according to the audio stream representation.

Specifically, the manner of extracting the target text content from the text file based on the current audio progress may include: determining, from the text file, text content with an audio timestamp matching the current audio progress, as the target text content.

In this embodiment, the text content in the text file is divided into a plurality of text segments, and each text segment includes a plurality of characters. The manner of text content with the audio timestamp matching the current audio progress may include: obtaining, from the text file, characters with the audio timestamp matching a timestamp corresponding to the current audio progress, and taking a text segment in which the matched characters are located and a preceding text segment and/or a following text segment adjacent to the text segment as the target text content. After the target text content is determined, the target text content is rendered into the interface for display, so that the display progress of the text content is synchronized with the playback progress of the audio stream.

Alternatively, obtaining the audio stream corresponding to the co-streaming end may be understood as: obtaining a corresponding audio stream when a user at the co-streaming end sings a target song; correspondingly, playing the audio stream, and rendering the target text content corresponding to the audio stream according to the current audio progress may be understood as: rendering, while playing the audio stream, the target text content corresponding to the audio stream into an interface for display in form of subtitles according to the current audio progress, such that the subtitles are displayed in synchronization with the playing of the audio stream.

The scheme of the embodiment may be applied to a co-streaming Karaoke scenario, and the co-streaming user includes a streamer and at least one guest. The streamer and at least one guest sing a target song in co-streaming manner, and the co-streaming end acquires audio of the co-streaming users to obtain the audio stream, and sends the audio stream to the viewer end for playing. The viewer end displays subtitles (that is, lyrics of the target song) corresponding to the audio stream while playing the audio stream. By adopting the solution of the present embodiment, synchronization between the playing of the audio and the displaying of the subtitles may be ensured.

According to the technical scheme of the embodiment of the invention, the latest reference audio progress and the audio stream corresponding to the co-streaming end are obtained. The co-streaming end includes a guest end and/or a streamer end, that is, the guest end and/or the streamer end participating in the co-streaming. The current audio progress of the audio stream is determined based on the local system time and the latest reference audio progress. The audio stream is played, and the target text content corresponding to the audio stream is rendered according to the current audio progress. According to the method for audio-based text processing provided by the embodiment of the present disclosure, the current audio progress of the audio stream is determined based on the local system time and the latest reference audio progress, so as to render the target text content corresponding to the audio stream according to the current audio progress, ensuring that a display progress of the text is accurately aligned with a playing progress of the audio, thereby improving an audio-visual effect of the audio.

FIG. 4 is a schematic structural diagram of an apparatus for audio-based text processing according to an embodiment of the present disclosure.

The latest reference audio progress obtaining module 210 is configured to obtain a latest reference audio progress and an audio stream corresponding to a co-streaming end, where the co-streaming end includes a guest end and/or a streamer end.

The current audio progress determining module 220 is configured to determine a current audio progress of the audio stream based on a local system time and the latest reference audio progress.

The target text content rendering module 230 is configured to play the audio stream and render target text content corresponding to the audio stream according to the current audio progress.

Alternatively, the current audio progress determining module 220 is further configured to: determine, based on the local system time, a time gap between a current moment and a moment when the latest reference audio progress is received; and determine the current audio progress of the audio stream according to the time gap and the latest reference audio progress.

Alternatively, the current audio progress determining module 220 is further configured to: obtain a first local system time corresponding to the current moment and a second local system time corresponding to the moment when the latest reference audio progress is received; and determine the time gap on the first local system time and the second local system time.

Alternatively, the current audio progress determining module 220 is further configured to determine the current audio progress of the audio stream based on the time gap and the latest reference audio progress.

Alternatively, the target text content rendering module 230 is further configured to: obtain a text file corresponding to the audio stream, where text content in the text file carries audio timestamps; extract, based on the current audio progress, the target text content from the text file; and render the target text content.

Alternatively, the target text content rendering module 230 is further configured to determine, from the text file, text content with an audio timestamp matching the current audio progress, as the target text content.

Alternatively, the latest reference audio progress obtaining module 210 is further configured to: receive latest media supplementary information and an audio stream corresponding to the co-streaming end; extract the latest reference audio progress from the latest media supplementary information, and record a local system time corresponding to a time when the latest media supplementary information is received.

Alternatively, the latest reference audio progress obtaining module 210 is further configured to: a corresponding audio stream when a user at the co-streaming end sings a target song.

Alternatively, the target text content rendering module 230 is further configured to: render, while playing the audio stream, the target text content corresponding to the audio stream into an interface for display in form of subtitles according to the current audio progress, such that the subtitles are displayed in synchronization with the playing of the audio stream.

The apparatus for audio-based text processing provided by the embodiments of the present disclosure may perform the method of audio-based text processing provided by any embodiments of the present disclosure, and has corresponding functional modules and beneficial effects for performing the method.

**It** is worth noting that the units and modules included in the above apparatus are only divided according to functional logic, but are not limited to the above division, as long as the corresponding functions may be implemented. In addition, the specific names of the functional units are only for the convenience of distinguishing from each other, and are not used to limit the protection scope of the embodiments of the present disclosure.

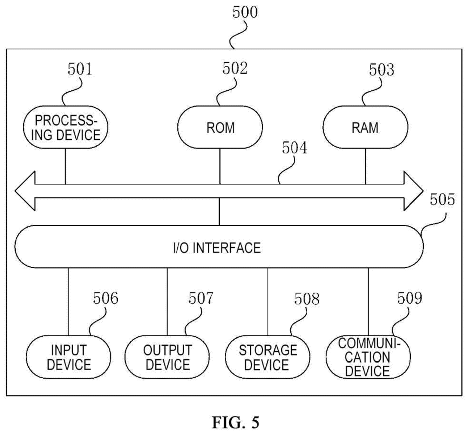

Fig. 5 is a schematic structural diagram of an electronic device according to an embodiment of the present disclosure. Referring to Fig. 5, Fig. 5 illustrates a schematic structural diagram of an electronic device 500(such as a terminal device or a server in Fig. 5) suitable for implementing the embodiments in the present disclosure. The terminal device in the embodiments of the present may include, but is not limited to, a mobile terminal such as a mobile phone, a notebook computer, a digital broadcast receiver, a personal digital assistant (PDA), a portable Android device (PAD), a portable media player (PMP), an in-vehicle terminal (for example, an in-vehicle navigation terminal), as well as a fixed terminal such as a digital TV, a desktop computer, or the like. The electronic device shown in Fig. 5 is merely an example, and should not impose any limitation on the functions and usage scope of the embodiments in the present disclosure.

As shown in Fig. 5, the electronic device 500 may include a processing device 501 (for example, a central processing unit, a graphics processor, etc.), which may perform various appropriate actions and processing according to a program stored in a read only memory (ROM) 502 or a program loaded into a random access memory (RAM) 503 from a storage device 508. In the RAM 503, various programs and data required by the electronic device 500 are also stored. The processing device 501, the ROM 502, and the RAM 503 are connected to each other through a bus 504. An edit/output (I/O) interface 505 is also connected to bus 504.

Generally, the following devices may be connected to the I/O interface 505: an input device 506 including, for example, a touch screen, a touch pad, a keyboard, a mouse, a camera, a microphone, an accelerometer, a gyroscope, and the like; an output device 509 including, for example, a liquid crystal display (LCD), a speaker, a vibrator, and the like; the storage device 508 including, for example, a magnetic tape, a hard disk, and the like; and a communication device 509. The communication device 509 may allow the electronic device 500 to communicate wirelessly or wired with other devices to exchange data. Although the electronic device 500 with various devices is shown in Fig. 5, it should be understood that it is not required to implement or have all illustrated devices. More or fewer devices may alternatively be implemented or provided.

In particular, according to embodiments in the present disclosure, the process described above with reference to the flowchart may be implemented as a computer software program. For example, the embodiments in the present disclosure include a computer program product including a computer program embodied on a nontransitory computer readable medium, the computer program including program code for performing the method shown in the flowchart. In such embodiments, the computer program may be downloaded and installed from the network through the communication device 509, or installed from the storage device 508, or from the ROM 502. When the computer program is executed by the processing device 501, the foregoing functions defined in the method of the embodiments in the present disclosure are performed.

The names of messages or information exchanged between multiple apparatuses in the implementations of the present disclosure are merely used for illustrative purposes, and are not used to limit the scope of these messages or information.

The electronic device provided by the embodiments of the present disclosure belongs to the same inventive concept as the method of audio-based text processing provided by the above embodiment. For technical details not described in detail in the present embodiment, reference may be made to the above embodiment, and the present embodiment has the same beneficial effects as the above embodiment.

An embodiment of the present disclosure provides a computer storage medium having a computer program stored thereon, where the program implements the method of audio-based text processing provided by the above embodiment when executed by a processor.

It should be noted that the computer-readable medium described above may be a computer readable signal medium, a computer readable storage medium, or any combination thereof. The computer-readable storage medium may be, for example, but not limited to, an electrical, magnetic, optical, electromagnetic, infrared, or semiconductor system, device, or apparatus, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, the computer-readable storage medium may be any tangible medium containing or storing a program that may be used by or in connection with an instruction execution system, device, or apparatus. In the present disclosure, a computer readable signal medium may include a data signal propagated in baseband or as part of a carrier, where the computer readable program code is carried. Such propagated data signals may take various forms including, but not limited to, electromagnetic signals, optical signals, or any suitable combination thereof. The computer readable signal medium may also be any computer readable medium other than a computer readable storage medium that may send, propagate, or transmit a program for use by or in connection with an instruction execution system, device, or apparatus. The program code embodied on the computer-readable medium may be transmitted with any suitable medium, including, but not limited to: wires, optical cables, radio frequency (RF), and the like, or any suitable combination thereof.

In some implementations, a client and a server may communicate with any currently known or future developed network protocol, such as Hyper Text Transfer Protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The computer-readable medium described above may be included in the electronic device; or may be separately present without being assembled into the electronic device.

The computer readable medium carries one or more programs, and when the one or more programs are executed by the electronic device, the electronic device is caused to: obtain a latest reference audio progress and an audio stream corresponding to a co-streaming end, where the co-streaming end includes a guest end and/or a streamer end; determine a current audio progress of the audio stream based on a local system time and the latest reference audio progress; and play the audio stream, and rendering target text content corresponding to the audio stream according to the current audio progress.

The computer program code for performing the action of the present disclosure may be written in one or more programming languages or a combination thereof, including but not limited to object oriented programming languages, such as Java, Smalltalk, and C + +, as well as conventional procedural programming languages, such as the "C" language or similar programming languages. The program code may be executed entirely on a user computer, partially on a user computer, as a stand-alone software package, partially on a user computer, partially on a remote computer, or entirely on a remote computer or server. In the case of a remote computer, the remote computer may be connected to the user computer through any type of network, including a local area network (LAN) or a wide area network (WAN), or may be connected to an external computer (for example, via the Internet using an Internet service provider).

The flowcharts and block diagrams in the figures illustrate architecture, functionality, and operation of possible implementations of systems, methods, and computer program products according to various embodiments in the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order from that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments in the present disclosure may be implemented in software, or may be implemented in hardware. The names of the units do not constitute limitations on the units themselves. For example, the first obtaining unit may also be described as "a unit for obtaining at least two Internet Protocol addresses."

The functions described above may be performed, at least in part, by one or more hardware logic components. For example of non-limiting, illustrative types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, device, or apparatus. The machine-readable medium may be a machine-readable signal medium or a machine-readable storage medium. The machine-readable medium may include, but is not limited to, electronic, magnetic, optical, electromagnetic, infrared, or semiconductor systems, devices, or apparatus, or any suitable combination thereof. More specific examples of machine-readable storage media may include electrical connections based on one or more wires, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

The above description is merely an illustration of the preferred embodiments in the present disclosure and the principles of the applied technology. It should be understood by those skilled in the art that the scope of the present disclosure is not limited to the technical solutions of the specific combination of the above technical features, and should also cover other technical solutions formed by any combination of the above technical features or their equivalent features without departing from the above disclosed concept. For example, technical solutions formed by replacing the above features with technical features having similar functions as disclosed (but not limited to those disclosed) in the present disclosure are also included.

Further, although operations are depicted in a particular order, this should not be understood to require that these operations be performed in the particular order shown or in sequential order. In certain circumstances, multitasking and parallel processing may be advantageous. Likewise, although several specific implementation details are included in the above discussion, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it should be understood that the subject matter defined in the appended claims is not necessarily limited to the specific features or acts described above. Rather, the specific features and acts described above are merely illustrative forms of implementing the claims.

## Claims

1. A method for audio-based text processing, implemented at a viewer end and comprising:
obtaining a latest reference audio progress and an audio stream corresponding to a co-streaming end, wherein the co-streaming end comprises a guest end and/or a streamer end;
determining a current audio progress of the audio stream based on a local system time and the latest reference audio progress; and
playing the audio stream, and rendering target text content corresponding to the audio stream according to the current audio progress.

2. The method of claim 1, wherein determining the current audio progress of the audio stream based on the local system time and the latest reference audio progress comprises:
determining, based on the local system time, a time gap between a current moment and a moment when the latest reference audio progress is received; and
determining the current audio progress of the audio stream according to the time gap and the latest reference audio progress.

3. The method of claim 2, wherein determining, based on the local system time, the time gap between the current moment and the moment at which the latest reference audio progress is received comprises:
obtaining a first local system time corresponding to the current moment and a second local system time corresponding to the moment when the latest reference audio progress is received; and
determining the time gap based on the first local system time and the second local system time.

4. The method of claim 2, wherein determining the current audio progress of the audio stream according to the time gap and the latest reference audio progress comprises:
determining the current audio progress of the audio stream based on the time gap and the latest reference audio progress.

5. The method of claim 1, wherein rendering the text content corresponding to the audio stream according to the current audio progress comprises:
obtaining a text file corresponding to the audio stream, wherein text content in the text file carries audio timestamps;
extracting, based on the current audio progress, the target text content from the text file; and
rendering the target text content.

6. The method of claim 5, wherein extracting, based on the current audio progress, the target text content from the text file comprises:
determining, from the text file, text content with an audio timestamp matching the current audio progress, as the target text content.

7. The method of claim 1, wherein obtaining the latest reference audio progress and the audio stream corresponding to the co-streaming end comprises:
obtaining latest media supplementary information and the audio stream corresponding to the co-streaming end; and
extracting the latest reference audio progress from the latest media supplementary information, and recording a local system time corresponding to a time when the latest media supplementary information is received.

8. The method of claim 1, wherein obtaining the audio stream corresponding to the co-streaming end comprises:
obtaining a corresponding audio stream when a user at the co-streaming end sings a target song; and
correspondingly, playing the audio stream, and rendering the target text content corresponding to the audio stream according to the current audio progress comprises:
rendering, while playing the audio stream, the target text content corresponding to the audio stream into an interface for display in form of subtitles according to the current audio progress, such that the subtitles are displayed in synchronization with the playing of the audio stream.

9. An apparatus for audio-based text processing, provided in a viewer end and comprising:
a latest reference audio progress obtaining module configured to obtain a latest reference audio progress and an audio stream corresponding to a co-streaming end, wherein the co-streaming end comprises a guest end and/or a streamer end;
a current audio progress determining module configured to determine a current audio progress of the audio stream based on a local system time and the latest reference audio progress; and
a target text content rendering module configured to play the audio stream, and render target text content corresponding to the audio stream according to the current audio progress.

10. An electronic device, comprising:
one or more processors; and
a storage device configured to store one or more programs,
the one or more programs, when executed by the one or more processors, causing the one or more processors to perform the method for audio-based text processing according to any of claims 1 to 8.

11. A storage medium comprising computer executable instructions, the computer executable instructions, when executed by a computer processor, implementing the method for audio-based text processing according to any of claims 1 to 8.

12. A computer program product tangibly stored in a computer storage medium and comprising computer-executable instructions that, when executed by a device, cause the device to perform the method of any of claims 1 to 8.
